# EUROPÄISCHE PATENTSCHRIFT

(11) **EP 0 608 748 B1**
(45) Veröffentlichungstag und Bekanntmachung des Hinweises auf die Patenterteilung: **19.08.1998**
(21) Anmeldenummer: 94100624.9
(22) Anmeldetag: 18.01.1994
(51) Int. Cl.: B32B 27/08, B32B 27/30, C08F 290/04

(54) **Transparentes Scheiben-Verbundsystem**
Transparent glass laminate
Vitre stratifié transparent

(30) Priorität: 23.01.1993 DE 4301848
(43) Veröffentlichungstag der Anmeldung: 03.08.1994
(73) Patentinhaber: Röhm GmbH, 64293 Darmstadt (DE)
(72) Erfinder: Siol, Werner, Dr., D-64297 Darmstadt (DE); Koralewski, Klaus, D-64560 Riedstadt (DE); Lorenz, Hans, D-64291 Darmstadt (DE); Meier-Kaiser, Michael, Dr., D-64319 Pfungstadt (DE)

(56) Entgegenhaltungen:
- DE-A- 3 902 653
- US-A- 5 028 677
- US-A- 5 053 461
- CHEMICAL ABSTRACTS, vol. 105, no. 18, 3. November 1986, Columbus, Ohio, US; abstract no. 154387e, 'ACRYLIC SHEET LAMINATES FOR GLASS SUBSTITUTES' Seite 61 ;Spalte 2
- DATABASE WPI Week 8240, Derwent Publications Ltd., London, GB; AN 82-84797E (40)
- DATABASE WPI Week 7808, Derwent Publications Ltd., London, GB; AN 78-14931A (08)

## Beschreibung

### Gebiet der Erfindung

Die Erfindung betrifft ein transparentes Verbundsystem aus Polymethylmethacrylat(PMMA)-Scheiben mit einer zwischen je zwei zu verbindenden PMMA-Scheiben befindlichen Zwischenschicht aus einem elastomeren Harz auf Acrylatbasis.

### Stand der Technik

Polymethylmethacrylat und daneben Copolymerisate des Methylmethacrylats besitzen bekanntlich in hohem Maße die für Verglasungsmaterialien erwünschten Eigenschaften, insbesondere hohe Transparenz und relative Witterungsbeständigkeit und - im Vergleich mit Silikatglas - ein geringeres Gewicht. Allerdings steht den vorteilhaften optischen Eigenschaften des reinen PMMA die Sprödigkeit dieses Materials gegenüber, die sich beispielsweise im Absplittern von Teilen einer PMMA-Platte bei entsprechender mechanischer Beanspruchung bemerkbar machen kann.

Verständlicherweise setzt die intrinsische Sprödigkeit des PMMA (neben einer nicht allzu hohen Kratzfestigkeit und der Brennbarkeit) dessen Einsatzmöglichkeiten insbesondere in den Bereichen "Bauen" und "Verkehr" zunächst etwas herab. Es hat daher auch nicht an Versuchen gefehlt, diesen Nachteilen abzuhelfen. (Vgl. H. Rauch-Puntigam, Th. Völker, Acryl- und Methacrylverbindungen, Springer-Verlag 1967, S. 291).

Die DE-A 29 14 223 empfiehlt z.B. eine klar durchsichtige Kunstharzverbundscheibe, bestehend aus einer wenigstens 1 mm dicken, klar durchsichtigen Grundscheibe aus Kunststoff mit parallelen Oberflächen, wenigstens einer klar durchsichtigen Kunststoff-Folie mit einer Kratzfestigkeit, die nicht geringer als die der Grundscheibe ist und wenigstens einer klar durchsichtigen, zwischen der Grundscheibe und der Kunststoff-Folie angeordneten Klebharzschicht, die an der Folie unlösbar haftet und von der Grundscheibe abziehbar ist.

Aus der JP-A 61 132 343 (Chem. Abstr. 105, 154387e) ist ein Acrylglas-Laminat bekannt, das aus zwei Außenscheiben aus Hart-Plastik und einer Zwischenschicht aus Weichplastik, die eine elektrisch leitfähige Schicht auf oder nahe der Oberfläche aufweist. Beispielsweise dient als Zwischenschicht ein MMA-Methylacrylat-Elastomer, das beidseitig mit einem antistatischen Agens und einem Acrylat-Kleber versehen ist.

Die DE-A 31 28 985 sieht laminierte thermoplastische Gegenstände vor. Die Laminate werden durch Fügen mindestens eines PMMA-Films mit mindestens einem schlagzähen Methacrylat-Polymeren im Kalander erhalten.

In der EP 419 166 werden coextrudierte Mehrschichtbahnen beschrieben mit einer komplexen Konfiguration von je 0,3 - 6 mm dicken Einzelschichten. Die erste Außenschicht soll aus einem Blend aus Polyvinylidenfluorid mit Mₙ < 250 000, 30 - 60 Gew.-% C1-C8-Alkylmethacrylat mit Mₙ ≤ 150 000 und ggfls. 10 - 30 Gew.-% eines Pfropfelastomeren aus C1-C8-Alkylacrylat gepfropft und vernetzt mit Allylmethacrylat, sowie mindestens einer zweiten Schicht aus einem Alkylmethacrylat-Homo- oder -Copolymer bestehen. Die Coextrusion erfolgt über eine Mehrfach-Extrusionsdüse. Ferner finden sich Arbeiten über Laminate aus verschiedenartigen Kunststoffen. So werden von Illinger et al. in Polym. Sci. Technol. 1975, 9A (Adhes. Sci.Technol) 217 - 232, Laminate aus Acrylat-Polyurethan-Polycarbonat zum Schutz von Frontscheiben vorgeschlagen, wobei betont wird, daS Schlagzähigkeit und optische Klarheit der Laminate von der chemischen Zusammensetzung der Verklebungs-Zwischenschicht abhängen. In der europ. Patentanmeldung 138 083 werden Polymermischungen als verklebende Zwischenschicht von Laminaten angegeben, die aus Copolymeren aus erstens 81 - 99 Gew.-Teilen Olefin und ungesättigten Carbonsäuren und zweitens 1 - 19 Gew.-Teilen thermoplastischen Elastomeren besteht, in denen erstere als Partikel dispergiert vorliegen. Als Versuch, die Splittersicherheit von Thermoplasten wie Acrylgläsern zu verbessern, kann auch die Verwendung von Faserinsbesondere Glas- und Kohlefaser-Einlagen betrachtet werden (vgl. EP 0 510 927).

### Aufgabe und Lösung

Es bestand weiterhin die Aufgabe, die vorstehend geschilderten Nachteile von Polymethylmethacrylat als Werkstoff speziell auf dem Gebiet der Verglasungstechnik zu beheben unter Beibehaltung der vorteilhaften Eigenschaften, insbesondere der optischen Eigenschaften. Es wurde nun gefunden, daß ein transparentes Scheiben-Verbundsystem bestehend aus a) mindestens zwei wenigstens 2 mm dicken, vorzugsweise klar durchsichtigen Acrylglas-Außenscheiben S und S' mit parallelen Oberflächen und b) einer Zwischenschicht Z enthaltend ein thermoplastisch verarbeitbares Elastomer die Anforderungen der Technik sehr gut erfüllt. Die Elastomeren E stellen erfindungsgemäß Kammpolymere aus Polymethylmethacrylat (PMMA)-Makromonomeren und Alkylacrylat, insbesondere Butylacrylat dar. Die Zwischenschicht Z stellt u.a. die haftende, flächige Verbindung zwischen den beiden PMMA Außenscheiben S und S' her. Die Acrylglasaußenscheiben S und S' können an sich beliebige Dicken besitzen, aus praktischen Gesichtspunkten werden sie jedoch 50 mm, vorzugsweise 30 mm nur selten überschreiten. Die Schichtdicke der Zwischenschicht Z wird ebenfalls vorwiegend von praktischen Gesichtspunkten limitiert. Sie liegt im allgemeinen im Bereich 0,05 bis 5 mm, vorzugsweise bei 0,1 bis 3 mm Die sonstigen Abmessungen des transparenten Scheiben-Verbundsystems ergeben sich ebenfalls vorwiegend aus praktischen Erwägungen. Die Außenscheiben S/S' werden in Abmessungen von bis zu 10 m hergestellt. Da sich das transparente Verbundsystem in üblicher Weise mechanisch bearbeiten läßt, ist man bei dessen Herstellung nicht an die Einhaltung exakter Anwendungsdimensionen gebunden, jedoch kann es vorteilhaft sein, für bestimmte Anwendungen von vorgegebenen Dimensionen auszugehen.
Die Acrylglasscheiben S bzw. S' bestehen aus vorzugsweise handelsüblichem PMMA oder aus an sich bekannten transparenten Copolymerisaten des Methylmethacrylats, die gegenenfalls zweckmäßig modifiziert, z.B. vernetzt, mit an sich bekannten Stabilisatoren oder auch sonstigen Additiven z.B. flammfest oder antistatisch ausgerüstet sein können. Die Acrylglasscheiben können auch in an sich bekannter Weise eingefärbt sein. Ferner können sie, in der Regel an den exponierten Oberflächen, kratzfest beschichtet sein (vgl. Ullmann's Encyclopedia of Industrial Chemistry 5th Ed., Vol A20, 459 - 507, VCH 1992).
Für die Acrylglasscheibe S bzw. S' kommt sogenanntes gegossenes Material, Bandmaterial oder auch extrudiertes Material infrage. (Vgl. H.F. Mark et al. Encyclopedia of Polymer Science & Engineering. 2nd. Ed. Vol. 1, 276 - 278, J. Wiley 1985).
Die Zwischenschicht Z besteht ganz oder teilweise aus dem Elastomeren E. Die Elastomeren E stellen zu 60 bis 100 Gew.-% Kammpolymere KP aus 50 - 5 Gew.-% Polymethylmethacrylat-Makromonomeren der Formel I und 50 - 95 Gew.-% Alkylacrylat der Formel II dar. Derartige Kammpolymere sind beispielsweise in der DE-A 39 02 653 bzw. der DE-A 41 21 811 oder der US-A 5 028 677 beschrieben.

Die Kammpolymeren KP sind beispielsweise herstellbar, ausgehend von den Makromonomeren der Formel I 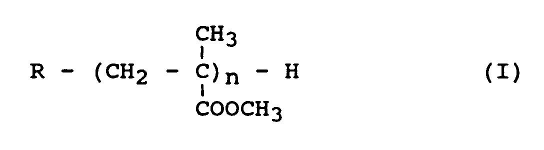 worin R für eine radikalisch polymerisierbare Endgruppe steht und n so bemessen ist, daß das Molekulargewicht der Makromonomeren im Bereich 500 - 100 000 Dalton liegt, durch Copolymerisation mit mindestens einem Alkylacrylat-Monomeren der Formel II. Vorzugsweise steht n für eine Zahl im Bereich 10 bis 1 000.
R entspricht im Anschluß an DE-A 39 02 653 vorzugsweise einer Gruppe der Formel III 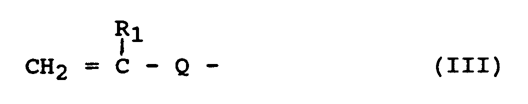 worin R₁ für Wasserstoff, Methyl und worin Q für einen bifunktionellen Rest, ausgewählt aus der Gruppe 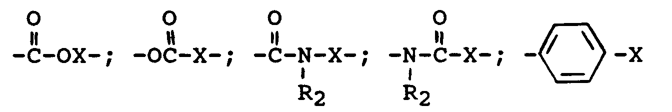 wobei R₂ Wasserstoff oder einen Alkylrest mit 1 bis 24 Kohlenstoffatomen, vorzugsweise 1 bis 6 Kohlenstoffatomen, bedeutet,
steht und X für einen Alkylidenrest mit 2 bis 24 Kohlenstoffatomen, vorzugsweise für einen Alkylidenrest, der mindestens ein Sauerstoff, Schwefel- oder Stickstoffatom, vorzugsweise anschließend an die polymere Kette, enthält.
Alternativ kann R auch im Anschluß an US-A 5 028 677 einer Gruppe der Formel IV entsprechen 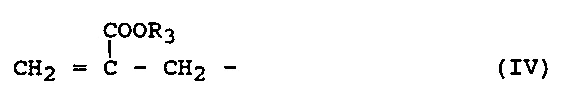 worin R₃ für einen Alkylrest mit vorzugsweise Methyl steht.
Besonders bevorzugt sind Gruppen X, ausgewählt aus den Formeln -CH₂CH₂-S-; 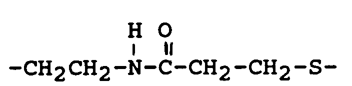 in Formel III.
Die Alkylacrylat-Comonomeren in den Kammpolymeren KP entsprechen der Formel II 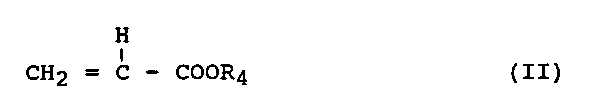 worin R₄ für C₂-C₂₀-Alkyl, insbesondere für Ethyl, Butyl, iso-Butyl, 2-Ethylhexyl und ganz besonders bevorzugt für Butyl steht.
Das Molekulargewicht der Kammpolymeren KP liegt im Bereich 50 000 bis 2 000 000, vorzugsweise 100 000 bis 800 000 Dalton.
Die Bestimmung der Molekulargewichte Mw geschieht durch SEC (Size Exclusion Chromatography; vgl. H.F. Mark et al. Encyclopedia of Polymer Science and Engineering, 2nd Ed. Vol. 10, pp. 1 - 19, J. Wiley & Sons 1967).

Soweit die Elastomeren E neben den Kammpolymeren KP in Anteilen von 0 - 40 Gew.-% eine weitere Polymerkomponente enthalten, handelt es sich zum einen um nicht-umgesetztes Rest-Makromonomer der Formel I, zum anderen um von I abgeleitetes Polymethylmethacrylat, das keine Vinylgruppe trägt, demnach kein Makromonomeres darstellt.
Diese Polymerkomponente kann bei der Makromonomersynthese in technischem Maßstab als Nebenprodukt auftreten, beispielsweise in Anteilen von 0,1 bis 40, insbesondere 0,5 bis 20 Gew.-% und ist somit mit diesen Anteilen im Elastomeren E vertreten.

Ein bevorzugtes Verfahren zur Herstellung der Kammpolymeren KP besteht in der radikalinitiierten Polymerisation der Makromonomeren der Formel I mit den Alkylacrylaten der Formel II, vorzugsweise im Gew.-Verhältnis 20 - 50 zu 80 - 50.
Die Polymerisation wird als Substanzpolymerisation oder vorzugsweise als Lösungspolymerisation, z.B. in einem Ester wie Butylacetat oder in Toluol und unter einem inerten Schutzgas wie z.B. Argon in einem mit Schutzgaseinleitung und Rührwiderstandmessvorrichtung ausgestatteten Reaktor unter Anwendung von Radikalinitiatoren wie beispielsweise einer Perverbindung wie z.B. eines Peresters, etwa tert.-Butyl-perneodecanoat in Mengen von 0,005 bis 0,5 Gew.-%, insbesondere ca. 0,1 Gew.-% durchgeführt. Vorteilhaft ist die portionsweise Zugabe des (gelösten) Initiators, beispielsweise gelöst in einem aliphatischen Lösungsmittel oder in den Monomeren selbst.
Anfänglich kann etwas erwärmt werden, beispielsweise auf ca. 50°C, dann gibt man eine Portion des gelösten Initiators und nach einigen Stunden, beispielsweise 3 1/2 Stunden, weiteren Initiator zu. Die Temperatur im Reaktor wird vorteilhaft durch Kühlen unter 60°C gehalten.
Man läßt die Reaktion noch einige Stunden weiterlaufen, beispielsweise insgesamt 12 Stunden lang. Vorteilhaft kann dann ein Stabilisator, beispielsweise aus der Klasse der HALS-Produkte ein Flammschutzmittel, beispielsweise auf Phosphorbasis in den üblichen Mengen (vgl. Ullmann's Encyclopedia of Industrial Chemistry, 5th Ed. Vol. A20 loc.cit.), zugesetzt werden. Das Polymere kann durch Ausfällen mit Methanol gewonnen werden oder auch durch Entgasung auf dem Extruder. Das Polymere hat die Charakteristika eines Elastomeren. Zur Herstellung der Makromonomeren der Formel I bedient man sich der Verfahren des Standes der Technik.

Beispielsweise können die Verbindungen der Formel I, worin R für 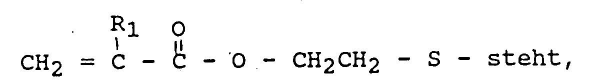 durch Acylierung der hydroxylgruppen-terminierten Vorstufe mit (Meth)acrylsäureanhydrid oder (Meth)acrylsäurechlorid oder durch Umesterung mit (Meth)acrylsäureester, vorzugsweise mittels Orthotitansäureester-Katalyse erhalten werden. (DE-A 41 21 811). Die hydroxylgruppen-terminierte Vorstufe kann durch radikalische Polymerisation von Methylmethacrylat in Gegenwart von 1 - 10 Gew.-% eines Mercaptoalkanols beispielsweise 2-Mercaptoethanols erhalten werden. Im folgenden soll der Ausdruck "PMMA-Scheiben" für sämtliche der vorliegenden Erfindung zugänglichen Kunststoff-Scheiben stehen.

### Das transparente Scheiben-Verbundsystem

Die Herstellung des transparenten Scheiben-Verbundsystems kann auf verschiedene Arten erfolgen, beispielsweise durch Verpressen der PMMA-Scheiben S und S' zwischen denen sich eine Schicht aus Elastomeren E befindet. Die Menge des Elastomeren ist in der Regel so bemessen, daß sich eine Dicke der Zwischenschicht Z von 0,05 bis 5 mm ergibt. Als Faustregel seien 100 bis 3000 g pro m² der Fläche der Scheibe S genannt.
Das Verpressen kann mit einer geeigneten Preßvorrichtung, z.B. einer hydraulischen Presse, normalerweise eingeleitet mit Erwärmen, beispielsweise auf 180°C, erfolgen. Die Erwärmungsdauer liegt zweckmäßig im Bereich oberhalb einer Stunde, beispielsweise bei 75 Minuten. Dann wird verpreßt, beispielsweise bei einem Preßdruck von 50 bar und auf Raumtemperatur abgekühlt.

Unter Beobachtung der rheologischen Voraussetzungen - Angleichung der Rheologie des Elastomeren E und der PMMA-Formmasse - kann das erfindungsgemäße Scheiben-Verbundsystem auch durch Extrusion erzeugt werden.

Die erfindungsgemäß erhaltenen Verbundscheiben lassen sich analog PMMA verarbeiten, insbesondere sägen und - bei Einhaltung geeigneter Parameter - auch thermisch umformen.

### Vorteilhafte Eigenschaften

Die erfindungsgemäßen transparenten Scheiben-Verbundsysteme werden den Anforderungen an transparente Verglasungen im vollen Umfang gerecht. Sie lassen sich in an sich bekannter Weise einsetzen, z.B. haltern, rahmen usw. Unter dem Aspekt der Sicherheit stellen sie einen erheblichen Fortschritt gegenüber dem Stand der Technik dar. Derartige Verbundscheiben lassen sich zwar durch einen mit genügender Wucht geführten Schlag oder Stoß zertrümmern, es erfolgt jedoch kein Absplittern der Bruchstücke. Die entstehenden Splitter bleiben an der Zwischenschicht Z haften.
Daher können die erfindungsgemäßen Scheiben-Verbundsysteme zum Teil vorteilhafterweise mit kratzfest ausgerüsteter Oberfläche mit Vorteil als Sicherheitsverglasung eingesetzt werden, z.B. in Gebäuden und Gebäudeteilen als Fenster, Schaufenster, Türen, Raumteiler, Vitrinen, Geländerverglasungen, Schalterverglasungen und bei Möbeln, ferner in allen Arten von Fahrzeugen, Kränen usw. als Fenster, Türen, Instrumentenverglasungen, in der Industrie für Sicherheitsabdeckungen, ferner für Bildverglasungen, optische Anwendungen usw. Besonders interessant ist die Anwendung für Verglasungen im öffentlichen Bereich, insbesondere wo Gefahr der Beschädigung durch Verkehr oder durch Vandalismus besteht, z.B. in Turnhallen, Schwimmbädern, für Warteräume, Telefonzellen, Überführungen, Brückengeländerverglasungen u.ä. Besonders genannt sei der Einsatz als Lärmschutzwände.

Die folgenden Beispiele dienen zur Erläuterung der Erfindung: Die Bestimmung der Viskosität J (ml/g) geschieht nach ISO 1628-6.

### BEISPIELE

### A. Herstellung der Elastomeren E

### A-1:

In einem Rührreaktor mit Schutzgaseinleitung, Kühlmaterial und Rührwiderstandsmessung werden unter Argon
- 96 g: Makromonomeres der Formel I-A (aus Beispiel A-2)
- 224 g: Butylacrylat
- 480 g: Butylacetat
vorgelegt und auf 51°C erwärmt.
Es werden 0,1 g einer 75 %igen Lösung von tert.-Butylperoxineodecanoat als Initiator in Aliphaten zur Initiierung zugesetzt. Nach ca. 3 1/2 Stunden werden weitere 0,2 g Initiator zugesetzt. Die Temperatur im Reaktor wird durch Kühlen unter 60°C gehalten. Nach insgesamt 8 Stunden Polymerisationsdauer wird durch Zugabe von 0,1 g TINUVIN ^{R} 770 in 500 g Butylacetat die Polymerisation beendet und das Polymere durch Ausfällen in 15 l Methanol isoliert. Alternativ kann das Polymer durch Entgasung mittels Extruder isoliert werden. Nach dem Trocknen erhält man ein klares, dehnbares, zähes Polymer. J = 331 ml/g.
Das Polymer hat eine Reißspannung δ_{R} = 11,5 MPa (Zugversuch nach DIN 53 455) und eine Reißdehnung εR von 433 % (nach DIN 53 455).

### A-2:

Herstellung der Makromonomeren der Formel I-A (Verbindung der Formel I, worin R für

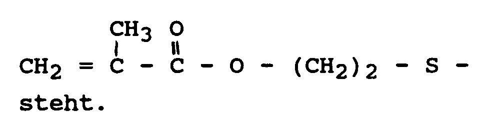

### Verwendete Apparatur:

2 l-Vierhalsrundkolben mit Rührer, Thermometer, Rückflußkühler mit Wasserabscheider, Siedekapillare zum Einleiten getrockneter Luft.

### Durchführung:

In der oben beschriebenen Apparatur löst man 140 g des hydroxy-terminierten Polymethylmethacrylats (J = 11,3 ml/g) aus A-3 zusammen mit 1 g 4-Methyl-2,6-di-tert.-butylphenol in 1 000 g Methylmethacrylat und erhitzt so lange zum Sieden, bis kein Wasser mehr abgeschieden wird. Anschließend werden 12 ml Isopropyltitanat zugegeben. Man erhitzt weitere 3 Stunden zum Sieden, läßt dann auf 88 Grad C abkühlen und tropft 20 ml Wasser zu. Der völlig erkaltete Rückstand wird durch Filtration über einem Druckfilter (Filterschicht Seitz S 500) vom entstandenen Niederschlag befreit.
Das klare, farblose Filtrat wird mit Hilfe eines Rotationsverdampfers bis zur Trockne eingeengt. Den entstandenen Rückstand löst man in 700 ml Aceton und fällt das Makromonomere der Formel I-A durch Eintropfen in 4 l Wasser aus. Das gefällte Material wird abfiltriert und im Umlufttrockenschrank bei 60°C getrocknet.

### A-3:

Herstellung des Hydroxylterminierten Polymethacrylats.

200 g Methylmethacrylat werden in einem 2 l Reaktor mit Kühlmantel, Rührer, Rückflußkühler, Tropftrichter und Thermometer auf 90°C erwärmt. Zur Inertisierung wird Argon eingeleitet.
Wenn die Innentemperatur 90°C erreicht hat, werden 4 g Mercaptoethanol zugesetzt. Danach wird die Polymerisation durch Zugabe von 0,04 g t-Butylperneodecanoat (75 %ig in Aliphaten) gelöst in 10 g Methylmethacrylat gestartet.
Die Polymerisation beginnt sofort, dabei steigt die Temperatur innerhalb von 5 Minuten im Reaktionsgefäß auf ca. 95°C bis 98°C wenn die Innentemperatur wieder fällt, werden gleichzeitig aus 2 verschiedenen Tropftrichtern innerhalb von 4 Stunden zudosiert:
- 0,4 g: t-Butylperneodecanoat gelöst in
- 780,0 g: Methylmethacrylat Tropftrichter 1
- 16,0 g: Mercaptoethanol Tropftrichter 2

Die Temperatur im Reaktor wird dabei im Bereich von 94 bis 98°C gehalten. Danach wird 20 Minuten bei ca. 96 bis 98°C behalten.
Danach wird eine Lösung von 0,5 g t-Butylperoxyneodecanoat in 250 g Toluol innerhalb von 4 Stunden bei 96 bis 98°C zudosiert (Endpolymerisation). Schließlich werden 0,02 g Tinuvin ® 770 in 250 g Toluol zur Stabilisierung zugesetzt, es wird auf Raumtemperatur abgekühlt und als Feststoff durch Ausfällen in Methanol gewonnen. Beispielsweise erhält man 660 g eines farblosen, spröden Polymeren
J = 11,3 ml/g.

### B. Herstellung des Scheiben-Verbundsystems

### B-1:

Durch Verpressen
60 g des Elastomeren E aus Beispiel A-1 werden zwischen zwei gegossene, transparente PMMA-Scheiben (Dicke 5 mm, Durchmesser 120 mm) verteilt und auf einer hydraulischen Presse ca. 75 min auf 180°C erwärmt. Dann wird mit 50 bar verpreßt und auf Raumtemperatur gekühlt, etwa 1 Stunde lang.
Man erhält eine Verbundscheibe mit sehr guter Transparenz und guter Haftung an der Zwischenschicht Z.
Beim Zertrümmern der Verbundscheibe durch Hammerschläge bleibt die Haftung zwischen dem Acrylglas und der Zwischenschicht, d.h. der Zusammenhalt des Systems, erhalten, so daß ein Umherfliegen von Glassplittern sicher vermieden wird.

## Patentansprüche

1. Transparente Scheiben-Verbundsysteme bestehend aus a) mindestens 2 wenigstens 2 mm dicken Acrylglas-Außenscheiben S, S' mit parallelen Oberflächen und b) einer, ein thermoplastisch verarbeitbares Elastomer enthaltenden, Zwischenschicht Z,
dadurch gekennzeichnet,
daß das Elastomer E zu 60 - 100 Gew.-% ein Copolymer aufgebaut aus einem Kammpolymer KP aus 50 bis 5 Gew.-% Polymethylmethacrylat-Makromonomeren der Formel I 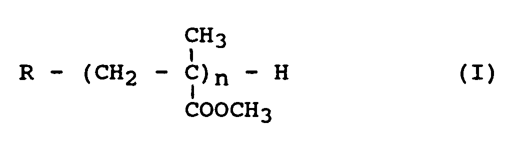 worin R für eine radikalisch polymerisierbare Endgruppe steht und n so bemessen ist, daß das Molgewicht der Makromonomeren im Bereich 500 bis 100 000 Dalton liegt und aus 95 bis 50 Gew.-% Alkylacrylaten der Formel II 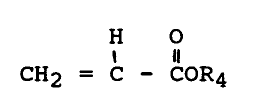 worin R₄ für einen Alkylrest mit 2 - 20 Kohlenstoffatomen steht, darstellt.

2. Transparente Scheiben-Verbundsysteme gemäß Anspruch 1, dadurch gekennzeichnet, daß die Zwischenschicht Z eine Dicke im Bereich 0,05 bis 5 mm besitzt.

## Claims

1. Transparent laminated sheet systems comprising a) at least two outer acrylic glass sheets S, S' at least 2 mm thick having parallel surfaces and b) an intermediate layer Z containing a thermoplastically workable elastomer, characterised in that the elastomer E is made up of 60 - 100 wt.% of a copolymer synthesised from a comb polymer KP consisting of 50 to 5 wt.% of polymethyl methacrylate macromonomers of formula I 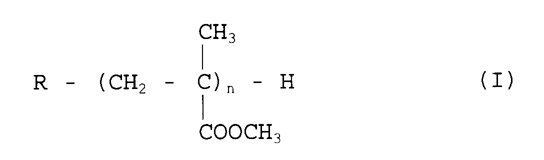 wherein R denotes a radically polymerisable terminal group and n is such that the molecular weight of the macromonomers is in the range from 500 to 100,000 Daltons, and 95 to 50 wt.% of alkyl acrylates of formula II 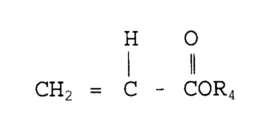 wherein R₄ denotes an alkyl group having 2 - 20 carbon atoms.

2. Transparent laminated sheet systems according to claim 1, characterised in that the intermediate layer Z has a thickness in the range from 0.05 to 5 mm.

## Revendications

1. Systèmes composites transparents de vitrage constitués
a) d'au moins 2 vitres S, S' externes en verre acrylique, épaisses d'au moins 2 mm ayant des surfaces parallèles et
b) d'une couche intermédiaire Z contenant un élastomère thermoplastique transformable,
caractérisés en ce que
l'élastomère E est constitué pour 60-100 % en poids d'un copolymère comprenant un polymère ramifié KP de 50 à 5 % en poids de macromonomères de poly(méthacrylate de méthyle) de formule I : 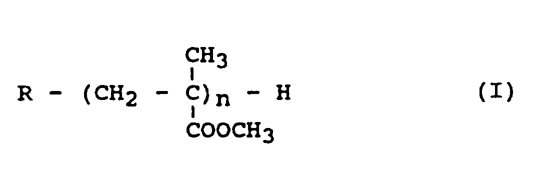 où R est un groupe terminal polymérisable par voie radicalaire et n est tel que le poids molaire des macromonomères est dans le domaine 500 à 100 000 dalton et de 95 à 50 % en poids d'acrylate d'alkyle de formule II : 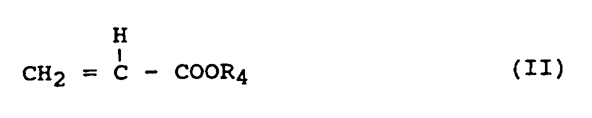 où R₄ est un radical alkyle de 2-20 atomes de carbone.

2. Systèmes composites transparents de vitrage selon la revendication 1,
caractérisés en ce que
la couche intermédiaire Z a une épaisseur comprise dans l'intervalle de 0,05 à 5 mm.
